# EUROPÄISCHE PATENTSCHRIFT

(11) **EP 2 416 046 B1**
(45) Veröffentlichungstag und Bekanntmachung des Hinweises auf die Patenterteilung: **03.07.2013**
(21) Anmeldenummer: 10305856.6
(22) Anmeldetag: 03.08.2010
(51) Int. Cl.: F16L 59/14, F16L 59/13

(54) **Leitungsrohr zum Transport von temperierten, fließfähigen Medien**
Conduit pipe for transporting tempered flowing media
Conduite de transport de fluides tempérés

(43) Veröffentlichungstag der Anmeldung: 08.02.2012
(73) Patentinhaber: Nexans, 75008 Paris (FR)
(72) Erfinder: Schippl, Klaus, Dipl.-Ing., 30659, Hannover (DE); Lange, Stephan, 30900, Wedemark (DE); Di Palma, Michele, 31832, Springe (DE)
(74) Vertreter: Döring, Roger

(56) Entgegenhaltungen:
- EP-A2- 0 866 259
- FR-A5- 2 142 380
- US-A- 3 826 286

## Beschreibung

Die Erfindung bezieht sich auf ein Leitungsrohr zum Transport von temperierten, fließfähigen Medien, bestehend aus zwei mit Abstand konzentrisch zueinander angeordneten metallischen Rohren, einem äußeren und einem inneren Rohr, zwischen denen eine thermische Isolierung und eine Abstandshalterung mit Abstandshaltern angebracht ist, welche aus zwei mit Abstand und koaxial zueinander angeordneten Ringen bestehen, einem Außenring und einem Innenring, zwischen denen eine mindestens einen zugfesten Faden aufweisende Fadenhalterung angebracht ist, bei welchem die Abstandshalter mit axialem Abstand zueinander zwischen den beiden Rohren angeordnet sind, wobei jeweils der Außenring innen an dem äußeren Rohr anliegt, während der Innenring auf dem inneren Rohr aufliegt (EP 0 866 259 B1).

Ein derartiges Leitungsrohr wird beispielsweise in der Kryotechnik zum Führen von gekühlten Flüssigkeiten oder Gasen und der Supraleitertechnik als Kryostat zum verlustarmen Führen eines Kühlmittels eingesetzt. Es kann aber auch zum verlustarmen Führen eines warmem oder heißen Fluids eingesetzt werden, beispielsweise als sogenanntes Fernheizkabel. Das Wort "temperiert" steht also sowohl für "gekühlt" als auch für "erwärmt", In beiden Fällen muß das Leitungsrohr so aufgebaut sein, daß es einen möglichst geringen Wärmedurchgang bzw. Wärmeübergang hat. Da der Aufbau des Leitungsrohrs für beide Anwendungen gleich ausgeführt ist, wird im folgenden sein Einsatz zum Transport eines gekühlten Mediums berücksichtigt, stellvertretend auch für ein erwärmtes Medium.

Die thermische Isolierung eines solchen Leitungsrohrs soll den von demselben umschlossenen Raum möglichst effektiv vor einem Wärmeeinfall von außen schützen. Sie kann beispielsweise durch die Anordnung einer Vielzahl von einseitig metallisierten Kunststofffolien im Ringraum zwischen den beiden Rohren des Leitungsrohrs erreicht werden, der zusätzlich auch evakuiert sein kann. Außerdem werden in axialen Abständen schlecht wärmeleitende Abstandshalter zwischen den beiden Rohren angebracht. Sie sind nach Möglichkeit so aufgebaut, daß das kalte innere Rohr an keiner Stelle im Verlauf des Leitungsrohrs direkten Kontakt zu dem auf Raumtemperatur befindlichen äußeren Rohr hat. Ein entsprechender Abstandshalter muß außerdem sowohl in radialer als auch in axialer Richtung des Leitungsrohrs stabil sein, um Bewegungen der beiden Rohre beim Betrieb des Leitungsrohrs abfangen zu können.

Bei dem bekannten Leitungsrohr nach der eingangs erwähnten EP 0 866 259 B1 sind aus zwei konzentrischen metallischen Ringen bestehende Abstandshalter zwischen den beiden Rohren eingesetzt, von den der Außenring am äußeren Rohr des Leitungsrohrs anliegt und der Innenring das innere Rohr umschließt. Zwischen den beiden Ringen der Abstandshalter ist jeweils eine Fadenhalterung eingesetzt, bei welcher zugfeste Fäden über Tragbolzen sowohl am Außenring als auch am Innenring befestigt sind. Mittels der Fäden ist der Innenring jeweils in den Außenring eingehängt. Die Abstandshalter nach dieser Druckschrift haben sich in der Praxis bewährt. Sie sind jedoch insbesondere wegen der Haltebolzen aufwendig gestaltet.

Der Erfindung liegt die Aufgabe zugrunde, die in dem eingangs geschilderten Leitungsrohr einzusetzende Abstandshalterung einfacher zu gestalten.

Diese Aufgabe wird gemäß der Erfindung dadurch gelöst,
- daß im Außenring des Abstandshalters mindestens drei in Umfangsrichtung gegeneinander versetzte Durchgangslöcher angebracht sind,
- daß der zugfeste Faden jeweils außen an der Umfangsfläche der beiden Ringe mit in Umfangsrichtung gerichtetem Verlauf anliegt und durch alle drei Durchgangslöcher des Außenrings hindurch entweder vom Außenring zum Innenring oder umgekehrt geführt ist und
- daß der Faden zwischen den beiden Ringen jeweils in gespanntem Zustand gehalten ist.

Ein Abstandshalter dieses Leitungsrohrs besteht nur aus den beiden konzentrisch zueinander angeordneten Ringen und dem dieselben in ihrer relativen Lage zueinander haltenden zugfesten Faden. Der Faden ist zwischen den beiden Ringen zumindest an drei in Umfangsrichtung gegeneinander versetzten, durch die Durchgangslöcher bestimmten Stellen gespannt, so daß er jeweils wie eine von einem Fahrrad her bekannte Speiche wirkt. Die relative radiale Position der beiden Ringe zueinander ist dadurch fixiert. Da der Faden außerdem bei beiden Ringen um die Umfangsflächen herum angeordnet ist, wobei er die Umfangsflächen insgesamt zumindest einmal vollständig umschlingen soll, ist auch die axiale Position der Ringe relativ zueinander festgelegt. Der Abstandshalter hat wegen des nur auf Zug belasteten, materialarmen Fadens eine sehr geringe Wärmeleitfähigkeit. Ihr Anteil am Gesamtwärmeeintrag beträgt nur wenige Prozentpunkte im einstelligen Bereich. Die thermische Isolierung im Ringspalt zwischen den beiden Rohren wird darüber hinaus durch den Abstandshalter nur unwesentlich unterbrochen, weil der Faden insgesamt in nur einer sehr schmalen, radial verlaufenden Ebene liegt.

Ausführungsbeispiele des Erfindungsgegenstandes sind in den Zeichnungen dargestellt.

Es zeigen:
Fig. 1 schematisch einen Abschnitt eines Leitungsrohrs nach der Erfindung teilweise im Schnitt.
Fig. 2 einen in dem Leitungsrohr nach Fig. 1 einsetzbaren Abstandshalter in prinzipieller Ausführung.
Fig. 3 einen Schnitt durch Fig. 2 längs der Linie III - III.
Fig. 4 einen Abstandshalter mit gekennzeichnetem Verlauf eines Fadens zwischen den Ringen.
Fig. 5 und 6 zwei unterschiedliche Ausführungsformen des Abstandshalters im Schnitt.

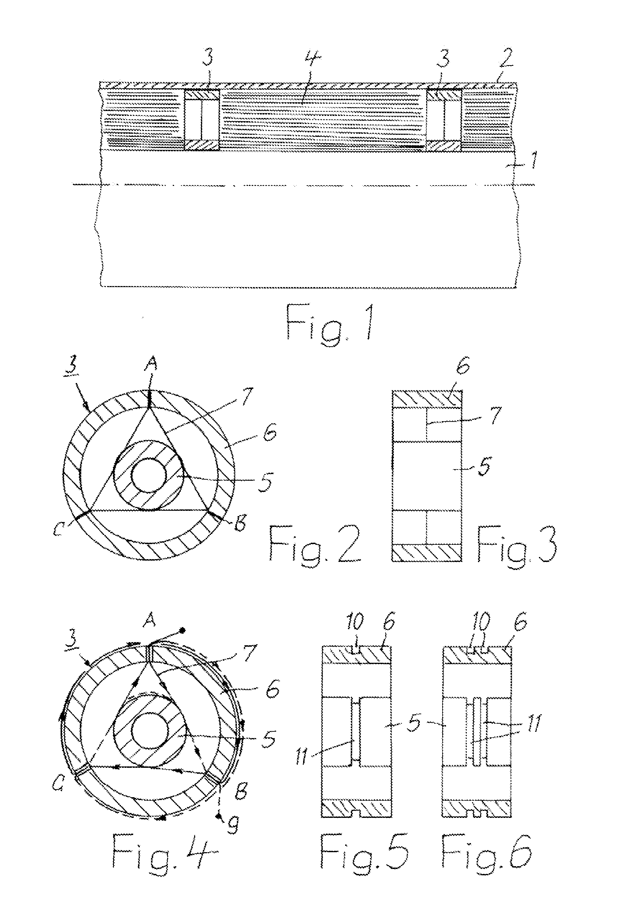

Ein in Fig. 1 im Ausschnitt dargestelltes Leitungsrohr besteht aus einem inneren Rohr 1 und einem dasselbe mit Abstand konzentrisch umgebenden äußeren Rohr 2. Beide Rohre 1 und 2 bestehen aus Metall, vorzugsweise aus Edelstahl. Sie können zur Verbesserung ihrer Biegbarkeit quer zu ihrer Längsrichtung gewellt sein. Zwischen den beiden Rohren 1 und 2 sind mit axialem Abstand zueinander Abstandshalter 3 angeordnet. Im Ringspalt zwischen den beiden Rohren 1 und 2 ist außerdem eine thermische Isolierung 4 angebracht, die mit Vorteil aus einer Vielzahl von einseitig metallisierten Kunststofffolien besteht. Die Isolierung 4 füllt den Ringspalt zwischen den beiden Rohren 1 und 2 nahezu vollständig aus. Sie wird in axialer Richtung nur von den Abstandshaltern 3 unterbrochen.

Bei der Herstellung des Leitungsrohrs werden die Abstandshalter 3 auf das innere Rohr 1 aufgeschoben und mit vorgegebenem Abstand zueinander in ihrer Position festgelegt. Das kann mit Vorteil durch die Isolierung 4 erfolgen, welche zwischen den Abstandshaltern 3 aufgebaut wird. Dabei können Teile der Isolierung 4, beispielsweise die schon erwähnten Kunststofffolien, relativ fest zwischen den am inneren Rohr 1 anliegenden Teilen der Abstandshalter 3 angeordnet werden. Um das mit Abstandshaltern 3 und Isolierung 4 bestückte Innenrohr 1 kann abschließend das äußere Rohr 2 herumgeformt werden. Das Innenrohr 1 mit Abstandshaltern 3 und Isolierung 4 kann aber auch in ein vorgefertigtes äußeres Rohr 2 eingeschoben werden.

Ein Abstandshalter 3 besteht gemäß Fig. 2 aus einem Innenring 5 und einem denselben mit Abstand koaxial umgebenden Außenring 6. Beide Ringe 5 und 6 bestehen aus einem mechanisch stabilen Material, vorzugsweise aus Edelstahl. Zwischen den beiden Ringen 5 und 6 ist ein Faden 7 angeordnet, der mehrfach zwischen denselben verläuft und die beiden Ringe 5 und 6 mit der Wirkung von Speichen in ihrer relativen radialen Lage zueinander hält. Der Faden 7 liegt gemäß Fig. 3 in nur einer sehr schmalen radialen Ebene, so daß die Isolierung 4 in seinem Bereich nahezu gar nicht unterbrochen wird.

Der Außenring 6 hat im dargestellten Ausführungsbeispiel drei in Umfangsrichtung gegeneinander versetzte Durchgangslöcher A, B und C. Sie sind mit Vorteil mit gleichbleibenden Abständen zueinander in Umfangsrichtung versetzt, so daß zwischen je zwei Durchgangslöchern ein Winkel von 120 ° liegt. Es können auch mehr als drei in Umfangsrichtung gegeneinander versetzte Durchgangslöcher im Außenring 6 angebracht sein.

Der Faden 7 verläuft an und zwischen den Ringen 5 und 6 gemäß Fig. 4 beispielsweise wie folgt:
Der Faden 7 wird mit seinem Anfangsende außen am Außenring 6 festgelegt. Ein entsprechender Festpunkt 8 ist nur schematisch angedeutet. Vom Festpunkt 8 aus tritt der Faden 7 durch das Durchgangsloch A im Außenring 6 hindurch. Er wird dann entsprechend den eingezeichneten Pfeilen um den Innenring 5 über einen vom Durchmesser desselben abhängigen Winkel von beispielsweise 160° herumgelegt und zum Durchgangsloch C geführt. Dabei wird er zwischen dem Durchgangsloch A und dem Innenring 5 einerseits sowie dem Innenring 5 und dem Durchgangsloch C andererseits straff gespannt. Nach Durchtritt durch das Durchgangsloch C wird der Faden 7 unter Anlage an der Umfangsfläche des Außenrings 6 beispielsweise über das Durchgangsloch A hinweg außen um den Außenring 6 bis zum Durchgangsloch B geführt, also über einen Winkel von 240°. Dieser längere Weg zwischen den Durchgangslöchern C und B ist mit Vorteil aus Stabilitätsgründen gewählt, weil der Faden 7 dadurch auf einer größeren Fläche bzw. Linie am Außenring 6 anliegt.

Danach tritt der Faden 7 durch das Durchgangsloch B nach innen hindurch und wird wieder unter Anlage am Innenring 5 über einen Winkel von etwa 160° zum Durchgangsloch A geführt. Dabei wird er wieder zwischen dem Durchgangsloch B und dem Innenring 5 einerseits sowie dem Innenring 5 und dem Durchgangsloch A andererseits straff gespannt. Damit liegt der Faden 7 zweifach zwischen dem Durchgangsloch A und dem Innenring 5, und zwar in gespanntem Zustand.

Der weitere Verlauf des Fadens 7 ist der Übersichtlichkeit halber gestrichelt eingezeichnet. Er tritt durch das Durchgangsloch A nach außen und wird mit Verlauf über das Durchgangsloch B auf der Umfangsfläche des Außenrings 6 zum Durchgangsloch C geführt. Nach Durchtritt durch das Durchgangsloch C wird der Faden 7 wieder um den Innenring 5 herumgelegt und zum Durchgangsloch B geführt, durch dasselbe hindurchgeführt und außen am Außenring 6 festgelegt, beispielsweise an einem wieder nur schematisch angedeuteten Festpunkt 9. Danach verläuft der Faden 7 auch zwischen den Durchgangslöchern B und C und dem Innenring 5 zweifach, und zwar in gespanntem Zustand. Der Innenring 5 ist damit rundum symmetrisch im Außenring 6 festgelegt und damit in seiner Lage koaxial zum Außenring 6 fixiert.

An allen Verbindungsstellen zwischen dem Außenring 6 und dem Innenring 5 ist der Faden 7 entsprechend den vorangehenden Ausführungen gespannt, so daß er die Funktion von Speichen hat, wie sie von Fahrrädern her bekannt sind. Er kann zur weiteren Verbesserung der Stabilität jeweils beim Herumlegen um die beiden Ringe 5 und 6 zusätzlich mindestens einmal vollständig um dieselben herumgewickelt sein.

Die beiden Ringe 5 und 6 können gemäß Fig. 5 in ihren Umfangsflächen jeweils eine in Umfangsrichtung umlaufende Nut 10 bzw. 11 haben, welche den Faden 7 bzw. dessen Windungen vollständig aufnehmen. Die Nut 10 kann auch zur Festlegung der Enden des Fadens 7 dienen. Über das Profil des Außenrings 6 ragen dann keine Teile hinaus. Die Nuten 10 und 11 sind mit Vorteil mittig in den Umfangsflächen der beiden Ringe 5 und 6 angebracht.

Falls eine erhöhte Stabilität der Verbindung zwischen Innenring 5 und Außenring 6 erreicht werden soll, können gemäß Fig. 6 auch jeweils zwei Nuten 10 bzw. 11 möglichst nah nebeneinander und parallel zueinander verlaufend in den Umfangsflächen der beiden Ringe 5 und 6 angebracht werden. Bei dieser Ausführungsform hat der Außenring 6 die doppelte Anzahl von Durchgangslöchern und es werden zwei voneinander getrennte Fäden 7 eingesetzt.

## Patentansprüche

1. Leitungsrohr zum Transport von temperierten, fließfähigen Medien, bestehend aus zwei mit Abstand konzentrisch zueinander angeordneten metallischen Rohren (1,2), einem äußeren und einem inneren Rohr, zwischen denen eine thermische Isolierung und eine Abstandshalterung mit Abstandshaltern (3) angebracht ist, welche aus zwei mit Abstand und koaxial zueinander angeordneten Ringen bestehen, einem Außenring (6) und einem Innenring (5), zwischen denen eine mindestens einen zugfesten Faden (7) aufweisende Fadenhalterung angebracht ist, bei welchem die Abstandshalter mit axialem Abstand zueinander zwischen den beiden Rohren angeordnet sind, wobei jeweils der Außenring innen an dem äußeren Rohr anliegt, während der Innenring auf dem inneren Rohr aufliegt, **dadurch gekennzeichnet,**
- **daß** im Außenring (6) des Abstandshalters (3) mindestens drei in Umfangsrichtung gegeneinander versetzte Durchgangslöcher (A,B,C) angebracht sind,
- **daß** der zugfeste Faden (7) jeweils außen an der Umfangsfläche der beiden Ringe (5,6) mit in Umfangsrichtung gerichtetem Verlauf anliegt und durch alle drei Durchgangslöcher (A,B,C) des Außenrings (6) hindurch entweder vom Außenring (6) zum Innenring (5) oder umgekehrt geführt ist und
- **daß** der Faden (7) zwischen den beiden Ringen (5,6) jeweils in gespanntem Zustand gehalten ist.

2. Leitungsrohr nach Anspruch 1, **dadurch gekennzeichnet, daß** die Durchgangslöcher (A,B,C) mit gleichbleibenden Abständen in Umfangsrichtung versetzt sind.

3. Leitungsrohr nach Anspruch 1 oder 2, **dadurch gekennzeichnet, daß** der außen am Außenring (6) festgelegte Faden (7) von einem ersten Durchgangsloch des Außenrings (6) kommend zumindest teilweise an der Umfangsfläche des Innenrings (5) angelegt ist, in seinem weiteren Verlauf durch ein zweites Durchgangsloch des Außenrings (6) nach außen geführt und außen zumindest teilweise an der Umfangsfläche desselben angelegt ist, danach in seinem weiteren Verlauf durch ein drittes Durchgangsloch des Außenrings (6) nach innen geführt und wieder zumindest teilweise an der Umfangsfläche des Innenrings (5) angelegt ist und danach in gleicher Weise weitergeführt ist, bis der Faden (7) zwischen den Durchgangslöchern (A,B,C) und dem Innenring (5) jeweils zweifach in gespanntem Zustand festgelegt ist.

4. Leitungsrohr nach einem der Ansprüche 1 bis 3, **dadurch gekennzeichnet, daß** die beiden Ringe (5,6) des Abstandshalters (3) an ihrer äußeren Umfangsfläche jeweils eine in Umfangsrichtung umlaufende Nut (10,11) zur Aufnahme des Fadens (7) bzw. der Windungen desselben aufweisen.

5. Leitungsrohr nach einem der Ansprüche 1 bis 3, **dadurch gekennzeichnet, daß** die beiden Ringe (5,6) des Abstandshalters (3) an ihrer äußeren Umfangsfläche jeweils zwei parallel zueinander in Umfangsrichtung umlaufende Nuten zur Aufnahme des Fadens (7) bzw. der Windungen desselben aufweisen.

## Claims

1. A pipeline for the transport of tempered, fluid media, comprising two metallic tubes (1,2) which are arranged concentrically to each other, an outer tube and an inner tube, with a thermal insulation and a spacer arrangement with spacers (3) between them, which spacers (3) each comprises two rings, an outer ring (6) and an inner ring (5), which are arranged concentrically to each other and which are connected to each other by a tension proof fiber (7), wherein the spacers are arranged with distance to each other between the two tubes such, that respectively the outer ring abuts to the inner surface of the outer tube, while the inner ring is placed on the inner tube, **characterized in**
- **that** the outer ring (6) of the spacer (3) has at least three through holes (A,B,C) which are staggered in circumferential direction,
- **that** the tension proof fiber (7) is wound around the periphery of both rings (5,6) running in circumferential direction and passes through all through holes (A,B,C) of the outer ring (6) either from the outer ring (6) to the inner ring (5) or vice versa, and
- **that** the fiber (7) is tightened between the to rings (5,6) respectively in stretched condition.

2. A pipeline according to claim 1, **characterized in that** the though holes (A,B,C) are staggered in circumferential direction.

3. A pipeline according to claim 1 or 2, **characterized in that** the fiber (7) which is fixed to the outside of the outer ring (6), is lead through a first through hole and laid at least partly onto the outer surface of the inner ring (5), then it is passed through a second through hole of the outer ring (6) to the outside of the same and is laid to the outer surface of the outer ring (6) at least partly, then it is passed through a third through hole of the outer ring (6) to the inside of the same and again laid at least partly onto the outer surface of the inner ring (5) and thereafter the fiber (7) is lead in an equal manner until it is fixed twice between the through holes (A,B,C) and the inner ring (5) in a tightened condition.

4. A pipeline according to one of the claims 1 to 3, **characterized in that** the two rings (5,6) of the spacer (3) respectively have at their outer peripheral area a groove (10,11) extending in circumferential direction to receive the fiber (7) or windings of the same.

5. A pipeline according to one of the claims 1 to 3, **characterized in that** the two rings (5,6) of the spacer (3) respectively have at their outer peripheral area two grooves running parallel to each other and extending in circumferential direction to receive the fiber (7) or windings of the same.

## Revendications

1. Conduite de transport de milieux fluides tempérés, constituée de deux tubes métalliques (1, 2) disposés à distance l'un de l'autre concentriquement l'un par rapport à l'autre, un tube extérieur et un tube intérieur, entre lesquels est disposée une isolation thermique et un système d'espacement avec des éléments d'espacement (3) qui se composent de deux bagues disposées à distance l'une de l'autre et coaxialement l'une par rapport à l'autre, une bague extérieure (6) et une bague intérieure (5), entre lesquelles est disposé un système de fils présentant au moins un fil (7) résistant à la traction, les éléments d'espacement étant disposés à distance axiale les uns des autres entre les deux tubes, la bague extérieure s'appliquant à chaque fois à l'intérieur contre le tube extérieur tandis que la bague intérieure repose sur le tube intérieur,
**caractérisée en ce que**
- dans la bague extérieure (6) de l'élément d'espacement (3) sont pratiqués au moins trois trous de passage (A, B, C) décalés les uns par rapport aux autres dans la direction périphérique,
- le fil (7) résistant à la traction s'applique à chaque fois à l'extérieur contre la surface périphérique des deux bagues (5, 6) avec une étendue orientée dans la direction périphérique et est guidé à travers les trois trous de passage (A, B, C) de la bague extérieure (6) soit depuis la bague extérieure (6) jusqu'à la bague intérieure (5), soit inversement, et
- le fil (7) est maintenu à chaque fois dans l'état tendu entre les deux bagues (5, 6).

2. Conduite selon la revendication 1, **caractérisée en ce que** les trous de passage (A, B, C) sont décalés dans la direction périphérique suivant des espacements uniformes.

3. Conduite selon la revendication 1 ou 2, **caractérisée en ce que** le fil (7) fixé à l'extérieur sur la bague extérieure (6) est appliqué en provenance d'un premier trou de passage de la bague extérieure (6) au moins en partie contre la surface périphérique de la bague intérieure (5), est ensuite guidé vers l'extérieur dans son étendue à travers un deuxième trou de passage de la bague extérieure (6) et est appliqué à l'extérieur au moins en partie contre la surface périphérique de celle-ci, puis est guidé dans son étendue suivante vers l'intérieur à travers un troisième trou de passage de la bague extérieure (6), et est à nouveau appliqué au moins en partie contre la surface périphérique de la bague intérieure (5), et est ensuite à nouveau guidé de la même manière, jusqu'à ce que le fil (7) soit fixé à chaque fois deux fois dans l'état tendu entre les trous de passage (A, B, C) et la bague intérieure (5).

4. Conduite selon l'une quelconque des revendications 1 à 3, **caractérisée en ce que** les deux bagues (5, 6) de l'élément d'espacement (3) présentent au niveau de leur surface périphérique extérieure à chaque fois une rainure circonférentielle (10, 11) dans la direction périphérique, pour recevoir le fil (7) ou les enroulements de celui-ci.

5. Conduite selon l'une quelconque des revendications 1 à 3, **caractérisée en ce que** les deux bagues (5, 6) de l'élément d'espacement (3) présentent au niveau de leur surface périphérique extérieure à chaque fois deux rainures circonférentielles dans la direction périphérique, parallèles l'une à l'autre, pour recevoir le fil (7) ou les enroulements de celui-ci.
